# EUROPÄISCHE PATENTSCHRIFT

(11) **EP 1 203 229 B1**
(45) Veröffentlichungstag und Bekanntmachung des Hinweises auf die Patenterteilung: **10.09.2008**
(21) Anmeldenummer: 01953119.3
(22) Anmeldetag: 27.06.2001
(51) Int. Cl.: G01N 27/417

(54) **ELEKTROCHEMISCHES SENSORELEMENT**
ELECTROCHEMICAL SENSOR ELEMENT
ELEMENT DE DETECTION ELECTROCHIMIQUE

(30) Priorität: 19.07.2000 DE 10035036
(43) Veröffentlichungstag der Anmeldung: 08.05.2002
(73) Patentinhaber: ROBERT BOSCH GMBH, 70442 Stuttgart (DE)
(72) Erfinder: GRUENWALD, Werner, 70839 Gerlingen (DE); DIEHL, Lothar, 70499 Stuttgart (DE)
(86) Internationale Anmeldenummer: PCT/DE2001/002369
(87) Internationale Veröffentlichungsnummer: WO 2002/006811

(56) Entgegenhaltungen:
- EP-A- 0 580 206
- JP-A- 8 271 476
- JP-A- 2000 146 905
- US-A- 5 314 604
- US-A- 5 433 830
- US-A- 5 702 580

## Beschreibung

Die Erfindung betrifft ein elektrochemisches Sensorelement zur Bestimmung der Konzentration einer Gaskomponente in einem Gasgemisch, insbesondere zur Bestimmung der Sauerstoffkonzentration in Abgasen von Verbrennungsmotoren, nach dem Oberbegriff des Anspruchs 1.

### Stand der Technik

Ein derartiges elektrochemisches Sensorelement ist beispielsweise aus der DE 196 47 144 A1 bekannt. Diese Sensorelemente werden in Gasmessfühlern eingesetzt, die der Regelung des Luft-/Kraftstoffverhältnisses von Verbrennungsgemischen in Kraftfahrzeugmotoren dienen und als Breitband-Lambdasonden bekannt sind. In diesen Sensorelementen wird eine Konzentrationszelle mit einer elektrochemischen Pumpzelle kombiniert.

Die Konzentrationszelle weist eine in einem Messgasbereich angeordnete Messelektrode und eine in einem Referenzgasbereich angeordnete Referenzelektrode auf. Das Abgas gelangt über ein Gaszutrittsloch und eine Diffusionsbarriere in den Messgasbereich. Der Referenzgasbereich steht über eine auf der dem Messgasbereich abgewandten Seite des Sensorelements gelegenen Öffnung mit einer Referenzatmosphäre in Verbindung. Der Messgasbereich und der Referenzgasbereich liegen in derselben Schichtebene des als Schichtsystem aufgebauten Sensorelements und sind durch eine gasdichte Trennwand getrennt. Zwischen der Messelektrode und der Referenzelektrode baut sich eine sogenannte Nernstspannung auf, aus der sich das Verhältnis des Sauerstoffpartialdrucks im Messgasbereich zu dem Sauerstoffpartialdruck im Referenzgasbereich ermitteln läßt.

Die Pumpzelle weist eine erste, im Messgasbereich angeordnet Pumpelektrode und eine zweite, auf einer dem Abgas zugewandten Fläche des Sensorelements angeordnete Pumpelektrode auf und pumpt Sauerstoffionen aus dem Messgasbereich in das Abgas oder umgekehrt aus dem Abgas in den Messgasbereich. Eine an der Pumpzelle liegende Pumpspannung wird durch eine äußere Beschaltung so geregelt, dass im Messgasbereich ein vorbestimmter Sauerstoffpartialdruck vorliegt, der einer bestimmten Nernstspannung entspricht. Da die Pumpspannung so gewählt wird, dass der in der Pumpzelle fließende Pumpstrom durch die Diffusionsgeschwindigkeit der Sauerstoffmoleküle durch die Diffusionsbarriere begrenzt ist und da der Strom der durch die Diffusionsbarriere fließenden Sauerstoffmoleküle proportional zur Sauerstoffkonzentration des Abgases ist, lässt sich aus dem Pumpstrom der Sauerstoffpartialdruck des Abgases ermitteln.

Bei diesem Sensorelement ist nachteilig, dass die Ausbildung zweier voneinander gasdicht getrennter Gasräume, nämlich des Messgasbereiches und des Referenzgasbereiches, in einer Schichtebene des Sensorelements aufwendig und fertigungstechnisch schwierig ist.

Ein Sensorelement gemäß Oberbegriff des Anspruchs 1 ist aus US5 433 830 bekannt.

### Vorteile der Erfindung

Das erfindungsgemäße elektrochemische Sensorelement gemäß dem unabhängigen Anspruch hat den Vorteil, dass der Aufbau des Sensorelements wesentlich vereinfacht ist.

### Zeichnung

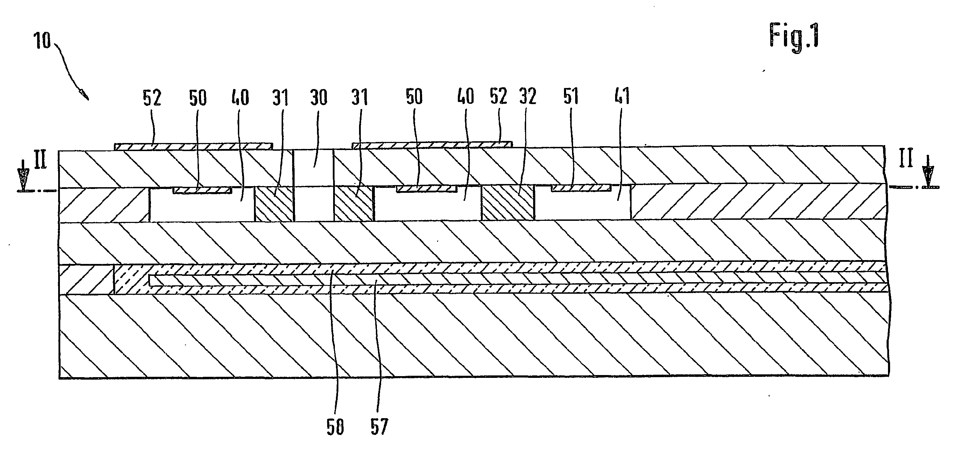

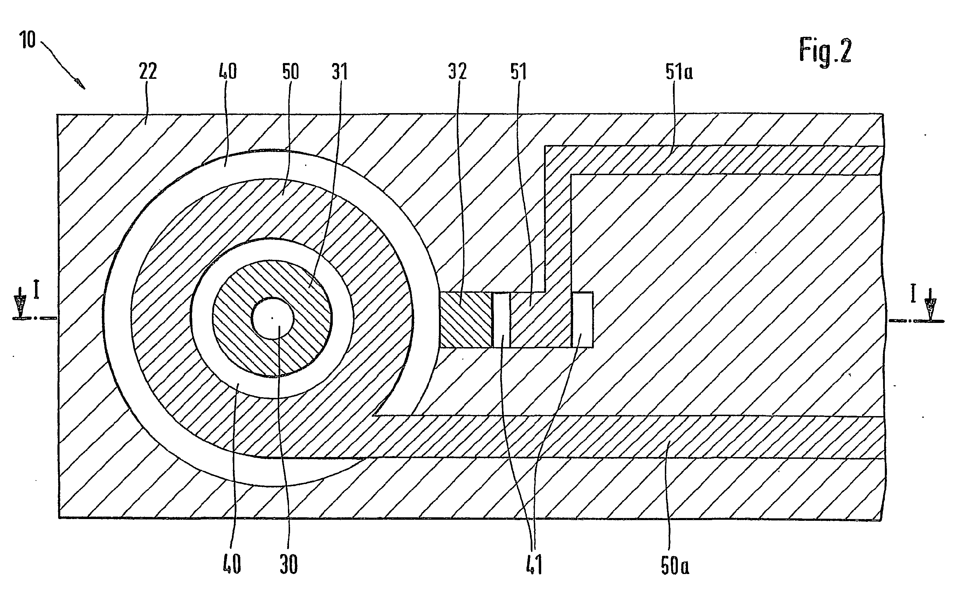

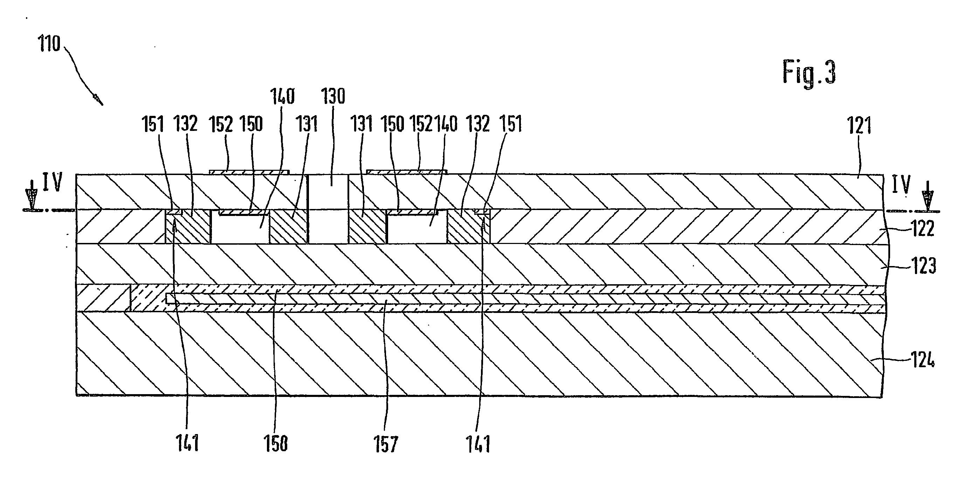

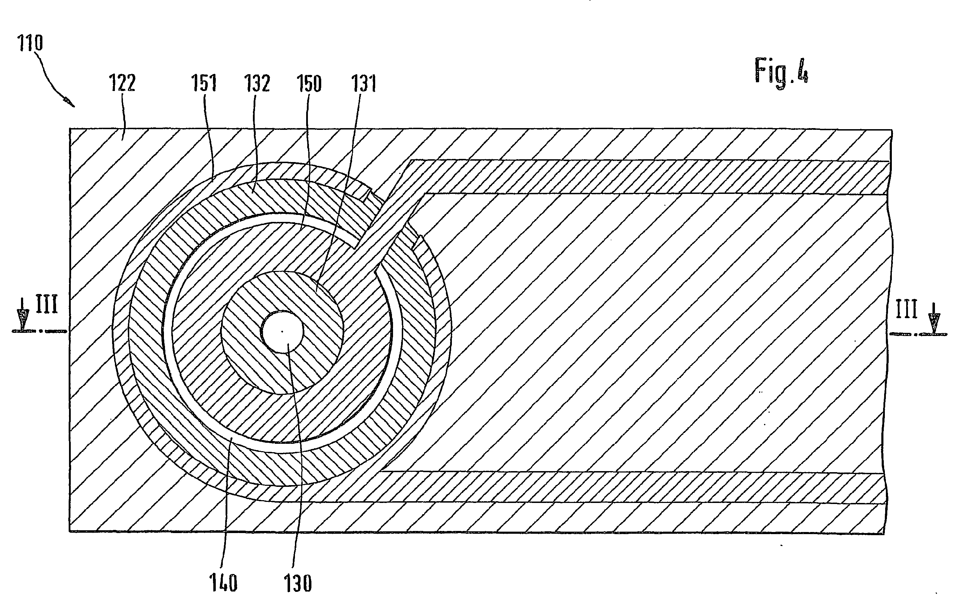

Ausführungsbeispiele der Erfindung sind in der Zeichnung dargestellt und in der nachfolgenden Beschreibung näher erläutert. Es zeigen Figur 1 eine Schnittdarstellung einer erste Ausführungsform des erfindungsgemäßen Sensorelements nach der Linie I - I in Figur 2, Figur 2 eine Schnittdarstellung der ersten Ausführungsform des erfindungsgemäßen Sensorelements nach der Linie II - II in Figur 1, Figur 3 eine Schnittdarstellung einer zweiten Ausführungsform des erfindungsgemäßen Sensorelements nach der Linie III - III in Figur 4, Figur 4 eine Schnittdarstellung der zweiten Ausführungsform des erfindungsgemäßen Sensorelements nach der Linie VI - VI in Figur 2 und Figur 5 und Figur 6 Längsschnitte weiterer Ausführungsformen des erfindungsgemäßen Sensorelements.

### Beschreibung der Ausführungsbeispiele

Figur 1 und Figur 2 zeigen als erstes Ausführungsbeispiel der Erfindung ein Sensorelement 10 einer Breitband-Lambdasonde, das als Schichtsystem aufgebaut ist und eine erste, zweite, dritte und vierte Festelektrolytschicht 21, 22, 23, 24 aufweist. In die erste und zweite Festelektrolytschicht 21, 22 ist ein Gaszutrittsloch 30 eingebracht. In der zweiten Festelektrolytschicht 22 ist eine Aussparung vorgesehen, die einen Diffusionswiderstand 31, einen Messgasbereich 40, einen weiteren Diffusionswiderstand 32 und einen Referenzgasbereich 41 enthält. Die Aussparung besteht aus einem flachen zylinderförmigen Bereich, in dessen Mitte das Gaszutrittsloch 30 vorgesehen ist, das von dem hohlzylinderförmigen Diffusionswiderstand 31 und dem ebenfalls hohlzylinderförmigen Messgasbereich 40 umgeben ist, und einem kanalförmigen Bereich, in den der direkt an den zylinderförmigen Bereich angrenzende weitere Diffusionswiderstand 32 und der Referenzgasbereich 41 eingebracht sind.

Auf der ersten Festelektrolytschicht 21 sind im Messgasbereich 40 eine ringförmige Messgaselektrode 50 mit einer Zuleitung 50a und im Referenzgasbereich 41 eine Referenzelektrode 51 mit einer Zuleitung 51a vorgesehen. Auf der Außenfläche der ersten Festelektrolytschicht 21 ist eine ringförmige Pumpelektrode 52 aufgebracht. An die zweite Festelektrolytschicht 22 grenzt die dritte und vierte Festelektrolytschicht 23, 24. Zwischen der dritten und der vierten Festelektrolytschicht 23, 24 ist ein Heizelement 57 mit einer Heizisolierung 58 vorgesehen.

Die Pumpelektrode 52 bildet zusammen mit der Messgaselektrode 50 eine Pumpzelle, die durch eine äußere Beschaltung Sauerstoff in den oder aus dem Messgasbereich 40 pumpt. Die durch die äußere Beschaltung an der Pumpzelle anliegende Pumpspannung wird so geregelt, dass im Messgasbereich 40 ein vorbestimmter Sauerstoffpartialdruck vorliegt. Vorzugsweise wird ein Sauerstoffpartialdruck von λ=1 eingeregelt, das heißt, der Sauerstoffpartialdruck entspricht dem stöchiometrischen Luft/Kraftstoff-Verhältnis.

Der im Messgasbereich 40 vorliegende Sauerstoffpartialdruck wird durch eine Nernstzelle bestimmt, die durch die Messgaselektrode 50 und die Referenzelektrode 51 gebildet wird. Mit der Nernstzelle wird eine durch unterschiedliche Sauerstoffpartialdrücke im Messgasbereich 40 und im Referenzgasbereich 41 hervorgerufene Nernstspannung gemessen, die zur Regelung der Pumpspannung verwendet wird. Hierzu ist erforderlich, dass im Referenzgasbereich 41 ein hinreichend konstanter Sauerstoffpartialdruck vorliegt. Daher wird durch die äußere Beschaltung ein geringer Pumpstrom zwischen der Messgaselektrode 50 und der Referenzelektrode 51 oder zwischen der Pumpelektrode 52 und der Referenzelektrode 51 bewirkt. Durch diesen Pumpstrom von beispielsweise 5 bis 50 µA wird Sauerstoff in den Referenzgasbereich 41 gepumpt. Abhängig vom Sauerstoffpartialdruck im Abgas kann der Sauerstoffpartialdruck im Referenzgasbereich 41 beispielsweise im Bereich von 0,01 bar bei fettem Abgas bis 0,3 bar bei sehr magerem Abgas schwanken. Der Einfluss dieser Schwankungen auf die Nernstspannung ist jedoch vernachlässigbar.

Das im Referenzgasbereich 41 befindliche Gas kann über den weiteren Diffusionswiderstand 32 in den Messgasbereich 40 gelangen. Eine weitere Verbindung zu einem außerhalb des Sensorelements gelegenen Gasraum, beispielsweise zur Luftatmosphäre, ist nicht notwendig. Der Sauerstoffpartialdruck im Messgasbereich 40 wird durch die Entlüftung des Referenzgasbereiches 41 in den Messgasbereich 40 aufgrund des geringen Pumpstroms nur in vernachlässigbarem Umfang verändert.

Es ist eine Ausführungsform denkbar, in der die Referenzelektrode 51 im Referenzgasraum 41 auf der dritten Festelektrolytschicht 23 aufgebracht ist.

Figur 3 und Figur 4 zeigen als zweites Ausführungsbeispiel der Erfindung ein Sensorelement 110 einer Breitband-Lambdasonde mit einer ersten und einer zweiten Festelektrolytschicht 121, 122, in die ein Gaszutrittsloch 130 eingebracht ist, und einer dritte und einer vierte Festelektrolytschicht 123, 124, zwischen denen ein Heizelement 157 mit einer Heizisolierung 158 vorgesehen ist. In der zweiten Festelektrolytschicht 122 ist eine Aussparung vorgesehen, die einen Diffusionswiderstand 131, einen Messgasbereich 140 mit einer Messgaselektrode 150, einen weiteren Diffusionswiderstand 132 und einen Referenzgasbereich 141 mit einer Referenzelektrode 151 enthält. Auf der Außenfläche der ersten Festelektrolytschicht 121 ist eine Pumpelektrode 152 aufgebracht.

Das zweite Ausführungsbeispiel unterscheidet sich vom ersten Ausführungsbeispiel dadurch, dass neben dem Diffusionswiderstand 131 und dem Messgasbereich 140 auch der weitere Diffusionswiderstand 132 und der Referenzgasbereich 141 in Form konzentrischer Hohlzylinder in einer flachen zylinderförmigen Aussparung angeordnet sind. Weiterhin ist der im Bereich der Referenzelektrode 151 liegende Referenzgasbereich 141 vollständig durch ein den weiteren Diffusionswiderstand 132 bildendes poröses Material ausgefüllt. Dementsprechend ist bei diesem Ausführungsbeispiel unter dem Referenzgasbereich 141 der zur Referenzelektrode 151 benachbarte Bereich des porösen Materials zu verstehen.

Es ist eine Ausführungsform denkbar, bei der die Referenzelektrode im Referenzgasraum 141 auf der dritten Festelektrolytschicht 123 aufgebracht ist. Es ist ebenfalls denkbar, dass der weitere Diffusionswiderstand die Referenzelektrode 151 nicht oder nur bereichsweise überdeckt.

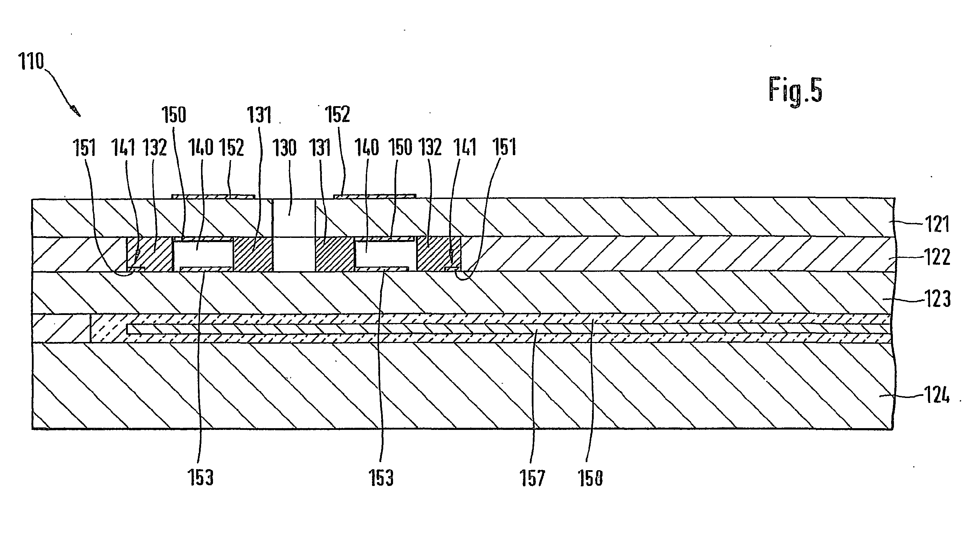

Figur 5 zeigt ein drittes Ausführungsbeispiel der Erfindung, das sich vom zweiten Ausführungsbeispiel dadurch unterscheidet, dass die Referenzelektrode 151 im Referenzgasbereich 141 auf der dritten Festelektrolytschicht 123 aufgebracht ist und dass im Messgasbereich 140 eine der Messgaselektrode 150 gegenüberliegende, auf der dritten Festelektrolytschicht aufgebrachte weitere Messgaselektrode 153 vorgesehen ist.

Bei diesem Ausführungsbeispiel kann die weitere Messgaselektrode 153 mit der Messgaselektrode 150 beispielsweise im Zuleitungsbereich elektrisch verbunden sein.

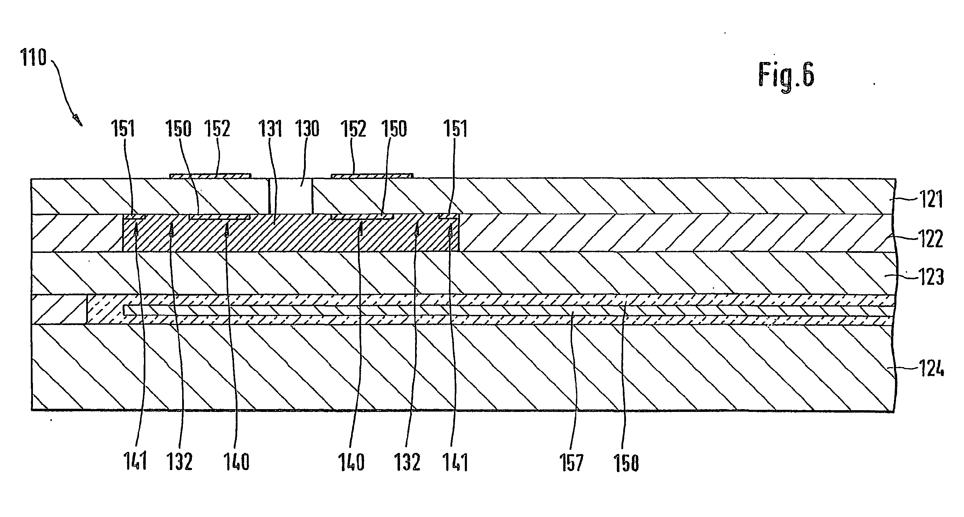

Figur 6 zeigt ein viertes Ausführungsbeispiel, das sich vom zweiten Ausführungsbeispiel dadurch unterscheidet, dass die Aussparung in der zweiten Festelektrolytschicht, die den Diffusionswiderstand 131, den Messgasbereich 140, den weiteren Diffusionswiderstand 132 und den Referenzgasbereich 141 enthält, vollständig durch ein poröses Material ausgefüllt ist. Unter dem Messgasbereich 140 ist in diesem Ausführungsbeispiel der zur Messgaselektrode 150 benachbarte Bereich des porösen Materials, unter dem Referenzgasbereich 141 zur Referenzelektrode 151 benachbarte Bereich des porösen Materials zu verstehen. Der Diffusionswiderstand 131 wird durch das zwischen dem Gaszutrittsloch 130 und der Messgaselektrode 150 liegende poröse Material gebildet, der weitere Diffusionswiderstand 132 wird durch das zwischen der Messgaselektrode 150 und der Referenzelektrode 151 liegende poröse Material gebildet.

## Patentansprüche

1. Sensorelement zur Bestimmung der Konzentration einer Gaskomponente in einem Gasgemisch, insbesondere zur Bestimmung der Sauerstoffkonzentration in Abgasen von Verbrennungsmotoren, mit mindestens einer Pumpzelle, die mindestens eine auf einer dem Gasgemisch zugewandten Fläche des Sensorelements (10, 110) angeordnete Pumpelektrode (52, 152) und mindestens eine in einem Messgasbereich (40, 140) angeordnete Messgaselektrode (50, 150) aufweist, wobei das Gasgemisch über einen Diffusionswiderstand (31, 131) in den Messgasbereich (40, 140) gelangt, sowie mit mindestens einer in einem Referenzgasbereich (41, 141) angeordneten Referenzelektrode (51, 151), wobei eine Messgaselektrode (50, 150) und die Referenzelektrode (51, 151) eine Nernstzelle bilden und eine zwischen der Messgaselektrode (50, 150) und der Referenzelektrode (51, 151) anliegende Nernstspannung gemessen und zur Regelung einer Pumpspannung verwendet wird, wobei zwischen dem Messgasbereich (40, 140) und dem Referenzgasbereich (41, 141) ein weiterer Diffusionswiderstand (32, 132) vorgesehen ist und der Referenzgasbereich (41,141) nur über den weiteren Diffusionswiderstand (32, 132) in Verbindung mit einem außerhalb des Sensorelements (10, 110) gelegenen Gasraum steht, **dadurch gekennzeichnet, dass** die Pumpzelle und die Nernstzelle mit derselben Messgaselektrode (50, 150) gebildet werden.

2. Sensorelement nach Anspruch 1, **dadurch gekennzeichnet, dass** die Gaskomponente durch eine äußere Beschaltung über die Referenzelektrode (51,151) in den Referenzgasbereich (41, 141) gepumpt wird.

3. Sensorelement nach Anspruch 2, **dadurch gekennzeichnet, dass** die Gaskomponente durch eine äußere Beschaltung vom Messgasbereich (40, 140) über die Messgaselektrode (50, 150) und die Referenzelektrode (51, 151) in den Referenzgasbereich (41, 141) gepumpt wird.

4. Sensorelement nach Anspruch 2, **dadurch gekennzeichnet, dass** die Gaskomponente durch eine äußere Beschaltung über die Pumpelektrode (52, 152) und die Referenzelektrode (51, 151) in den Referenzgasbereich (41, 141) gepumpt wird.

5. Sensorelement nach einem der vorherigen Ansprüche, **dadurch gekennzeichnet, dass** eine weitere Messgaselektrode (153) im Messgasbereich (40, 140) vorgesehen ist

6. Sensorelement nach Anspruch 5, **dadurch gekennzeichnet, dass** die weitere Messgaselektrode (153) mit der Messgaselektrode (50, 150) elektrisch verbunden ist.

7. Sensorelement nach Anspruch 5, **dadurch gekennzeichnet, dass** durch eine äußere Beschaltung die Gaskomponente vom Messgasbereich (40, 140) über die Messgaselektrode (50, 150) und die Referenzelektrode (51, 151) und/oder über die weitere Messgaselektrode (153) und die Referenzelektrode (51, 151) in den Referenzgasbereich (41, 141) gepumpt wird.

8. Sensorelement nach Anspruch 1, **dadurch gekennzeichnet, dass** das Sensorelement (10, 110) als Schichtsystem aufgebaut ist und dass der Diffusionswiderstand (31, 131), der Messgasbereich (40, 140), der weitere Diffusionswiderstand (32, 132) und der Referenzgasbereich (41, 141) zumindest zum überwiegenden Teil in einer Schichtebene des Sensorelements (10, 110) angeordnet sind.

9. Sensorelement nach Anspruch 8, **dadurch gekennzeichnet, dass** die Messgaselektrode (50, 150) und die Referenzelektrode (51, 151) in derselben Schichtebene des Sensorelements (10, 110) angeordnet sind.

10. Sensorelement nach Anspruch 8, **dadurch gekennzeichnet, dass** der Diffusionswiderstand (31, 131), der Messgasbereich (40, 140), der weitere Diffusionswiderstand (32, 132) und der Referenzgasbereich (41, 141) in einer zylinderförmigen Aussparung angeordnet sind und dass die Messgaselektrode (50, 150) und die Referenzelektrode (51, 151) ringförmige ausgebildet sind.

11. Sensorelement nach Anspruch 8, **dadurch gekennzeichnet, dass** der Diffusionswiderstand (31, 131) und der Messgasbereich (40, 140) in einer zylinderförmigen Aussparung angeordnet sind, dass die Messgaselektrode (50, 150) ringförmig ausgebildet ist und dass der weitere Diffusionswiderstand (32, 132) und der Referenzgasbereich (41, 141) in einer sich vom Messgasbereich (40, 140) aus kanalförmig erstreckenden weiteren Aussparung angeordnet sind.

12. Sensorelement nach Anspruch 1, **dadurch gekennzeichnet, dass** der Diffusionswiderstand (31, 131) und/oder der weitere Diffusionswiderstand (32, 132) durch eine poröse Schicht gebildet werden/wird.

13. Sensorelement nach Anspruch 1, **dadurch gekennzeichnet, dass** der Referenzgasbereich (40, 140) und/oder der Messgasbereich (41, 141) durch eine den Diffusionswiderstand (31, 131) und/oder den weiteren Diffusionswiderstand (32, 132) bildende poröse Schicht zumindest bereichsweise ausgefüllt sind/ist.

## Claims

1. Sensor element for determining the concentration of a gas component in a gas mixture, in particular for determining the oxygen concentration in exhaust gases of internal combustion engines, said sensor element having at least one pump cell, which has at least one pump electrode (52, 152), which is arranged on a surface of the sensor element (10, 110) which faces the gas mixture, and at least one measurement gas electrode (50, 150) which is arranged in a measurement gas region (40, 140), the gas mixture passing into the measurement gas region (40, 140) via a diffusion resistance (31, 131), and having at least one reference electrode (51, 151) which is arranged in a reference gas region (41, 141), a measurement gas electrode (50, 150) and the reference electrode (51, 151) forming a Nernst cell, and a Nernst voltage which is applied between the measurement gas electrode (50, 150) and the reference electrode (51, 151) being measured and being used to regulate a pump voltage, a further diffusion resistance (32, 132) being provided between the measurement gas region (40, 140) and the reference gas region (41, 141), and the reference gas region (41, 141) being connected to a gas space outside the sensor element (10, 110) only via the further diffusion resistance (32, 132), **characterized in that** the pump cell and the Nernst cell are formed with the same measurement gas electrode (50, 150).

2. Sensor element according to Claim 1, **characterized in that** the gas component is pumped into the reference gas region (41, 141) via the reference electrode (51, 151) by means of an external connection.

3. Sensor element according to Claim 2, **characterized in that** the gas component is pumped from the measurement gas region (40, 140) into the reference gas region (41, 141) via the measurement gas electrode (50, 150) and the reference electrode (51, 151) by means of an external connection.

4. Sensor element according to Claim 2, **characterized in that** the gas component is pumped into the reference gas region (41, 141) via the pump electrode (52, 152) and the reference electrode (51, 151) by means of an external connection.

5. Sensor element according to one of the preceding claims, **characterized in that** a further measurement gas electrode (153) is provided in the measurement gas region (40, 140).

6. Sensor element according to Claim 5, **characterized in that** the further measurement gas electrode (153) is electrically connected to the measurement gas electrode (50, 150).

7. Sensor element according to Claim 5, **characterized in that** the gas component is pumped from the measurement gas region (40, 140) into the reference gas region (41, 141) via the measurement gas electrode (50, 150) and the reference electrode (51, 151) and/or via the further measurement gas electrode (153) and the reference electrode (51, 151) by means of an external connection.

8. Sensor element according to Claim 1, **characterized in that** the sensor element (10, 110) is constructed as a layer system, and **in that** the diffusion resistance (31, 131), the measurement gas region (40, 140), the further diffusion resistance (32, 132) and the reference gas region (41, 141) are at least predominantly arranged in a layer plane of the sensor element (10, 110).

9. Sensor element according to Claim 8, **characterized in that** the measurement gas electrode (50, 150) and the reference electrode (51, 151) are arranged in the same layer plane of the sensor element (10, 110).

10. Sensor element according to Claim 8, **characterized in that** the diffusion resistance (31, 131), the measurement gas region (40, 140), the further diffusion resistance (32, 132) and the reference gas region (41, 141) are arranged in a cylindrical recess, and **in that** the measurement gas electrode (50, 150) and the reference electrode (51, 151) are annular.

11. Sensor element according to Claim 8, **characterized in that** the diffusion resistance (31, 131) and the measurement gas region (40, 140) are arranged in a cylindrical recess, **in that** the measurement gas electrode (50, 150) is annular, and **in that** the further diffusion resistance (32, 132) and the reference gas region (41, 141) are arranged in a further recess which extends in the form of a channel from the measurement gas region (40, 140).

12. Sensor element according to Claim 1, **characterized in that** the diffusion resistance (31, 131) and/or the further diffusion resistance (32, 132) is/are formed by a porous layer.

13. Sensor element according to Claim 1, **characterized in that** at least regions of the reference gas region (40, 140) and/or of the measurement gas region (41, 141) are filled with a porous layer which forms the diffusion resistance (31, 131) and/or the further diffusion resistance (32, 132).

## Revendications

1. Elément de capteur pour déterminer la concentration d'un composant gazeux d'un mélange de gaz notamment pour déterminer la concentration en oxygène dans les gaz d'échappement émis par les moteurs à combustion interne, ayant au moins une cellule de pompage munie d'au moins une électrode de pompage (52, 152) prévue sur la surface de l'élément de capteur (10, 110) tournée vers le mélange de gaz, et au moins une électrode de gaz de mesure (50, 150) prévue dans une zone de gaz de mesure (40, 140),
le mélange gazeux arrivant à travers une résistance de diffusion (31, 131) dans la zone de mesure de gaz (40, 140), ainsi qu'au moins une électrode de référence (51, 151) prévue dans une zone de gaz de référence (41, 141),
une électrode de gaz de mesure (50, 150) et l'électrode de référence (51, 151) formant une cellule de Nernst et mesurant la tension de Nernst appliquée entre l'électrode de gaz de mesure (50, 150) et l'électrode de référence (51, 151), cette tension étant utilisée pour réguler une tension de pompage,
une autre résistance de diffusion (32, 132) étant prévue entre la plage de gaz de mesure (40, 140) et la plage de gaz de référence (41, 141), et la plage de gaz de référence (41, 141) n'est reliée que par l'autre résistance de diffusion (32, 132) avec un volume de gaz situé à l'extérieur de l'élément de capteur (10, 110),
**caractérisé en ce que**
la cellule de pompage et la cellule de Nernst sont formées avec la même électrode de gaz de mesure (50, 150).

2. Elément de capteur selon la revendication 1,
**caractérisé en ce que**
la composante de gaz est pompée par l'intermédiaire d'un circuit extérieur par l'électrode de référence (51, 151) dans la plage de gaz de référence (41, 141).

3. Elément de capteur selon la revendication 2,
**caractérisé en ce que**
la composante de gaz est pompée par un branchement extérieur, à partir de la plage de gaz de mesure (40, 140) par l'intermédiaire de l'électrode de gaz de mesure (50, 150) et l'électrode de référence (51, 151) dans la plage de gaz de référence (41, 141).

4. Elément de capteur selon la revendication 2,
**caractérisé en ce que**
la composante de gaz est pompée par l'intermédiaire d'un branchement extérieur, par l'électrode de pompage (52, 152) et l'électrode de référence (51, 151) dans la plage de gaz de référence (41, 141).

5. Elément de capteur selon les revendications précédentes,
**caractérisé par**
une autre électrode de gaz de mesure (153) prévue dans la plage de gaz de mesure (40, 140).

6. Elément de capteur selon la revendication 5,
**caractérisé en ce que**
l'autre électrode de mesure de gaz (153) est reliée électriquement à l'électrode de mesure de gaz (50, 150).

7. Elément de capteur selon la revendication 5,
**caractérisé en ce que**
par un branchement extérieur, on pompe la composante de gaz de la plage de gaz de mesure (40, 140) à l'aide de l'électrode de gaz de mesure (50, 150) et l'électrode de référence (51, 151) et/ou par l'autre électrode de gaz de mesure (153) et l'électrode de référence (51, 151) dans la plage de gaz de référence (41, 141).

8. Elément de capteur selon la revendication 1,
**caractérisé en ce que**
l'élément de capteur (10, 110) a une structure de système stratifiée, et la résistance de diffusion (31, 131), la plage de gaz de mesure (40, 140), l'autre résistance de diffusion (32, 132) et la plage de gaz de référence (41, 141) sont prévues au moins en grande partie dans un plan de couche de l'élément de capteur (10, 110).

9. Elément de capteur selon la revendication 8,
**caractérisé en ce que**
l'électrode de gaz de mesure (50, 150) et l'électrode de référence (51, 151) sont prévues dans le même plan de couche de l'élément de capteur (10, 110).

10. Elément de capteur selon la revendication 8,
**caractérisé en ce que**
la résistance de diffusion (31, 131), la plage de gaz de mesure (40, 140), l'autre résistance de diffusion (32, 132) et la plage de gaz de référence (41, 141) sont logées dans une cavité de forme cylindrique, et
l'électrode de gaz de mesure (50, 150) et l'électrode de référence (51, 151) ont une forme annulaire.

11. Elément de capteur selon la revendication 8,
**caractérisé en ce que**
la résistance de diffusion (31, 131) et la plage de gaz de mesure (40, 140) sont logées dans une cavité de forme cylindrique,
l'électrode de gaz de mesure (50, 150) ayant une forme annulaire, et
l'autre résistance de diffusion (32, 132) et la plage de gaz de référence (41, 141) étant prévues dans une autre cavité se développant en forme de canal à partir de la plage de gaz de mesure (40, 140).

12. Elément de capteur selon la revendication 1,
**caractérisé en ce que**
la résistance de diffusion (31, 131) et/ou l'autre résistance de diffusion (32, 132) sont réalisées par une couche poreuse.

13. Elément de capteur selon la revendication 1,
**caractérisé en ce que**
la plage de gaz de référence (40, 140) et/ou la plage de gaz de mesure (41, 141) sont remplies au moins en partie par une couche poreuse formant la résistance de diffusion (31, 131) et/ou l'autre résistance de diffusion (32, 132).
